(19) Europäisches Patentamt
European Patent Office
Office européen des brevets

(11) **EP 1 804 591 B1**

(12) **EUROPEAN PATENT SPECIFICATION**

(45) Date of publication and mention
of the grant of the patent:
**25.08.2010 Bulletin 2010/34**

(51) Int Cl.:
*A23G 4/02* (2006.01)    *A23G 4/10* (2006.01)
*A23G 3/42* (2006.01)    *A23G 3/34* (2006.01)

(21) Application number: **05795072.7**

(22) Date of filing: **13.10.2005**

(86) International application number:
**PCT/EP2005/010982**

(87) International publication number:
**WO 2006/040144 (20.04.2006 Gazette 2006/16)**

(54) **IMPROVED PAN COATING PROCESS**

VERBESSERTES TROMMELCOATING-VERFAHREN

PROCEDE D'ENROBAGE EN CUVE AMELIORE

(84) Designated Contracting States:
**AT BE BG CH CY CZ DE DK EE ES FI FR GB GR HU IE IS IT LI LT LU LV MC NL PL PT RO SE SI SK TR**

(30) Priority: **15.10.2004 US 619177 P**
         **15.10.2004 DE 102004050516**
         **09.03.2005 US 75930**

(43) Date of publication of application:
**11.07.2007 Bulletin 2007/28**

(73) Proprietor: **Südzucker Aktiengesellschaft Mannheim/Ochsenfurt**
**68165 Mannheim (DE)**

(72) Inventors:
• **RAPP, Knut, M.**
  **D-67591 Offstein (DE)**

• **HASSLINGER, Bernd**
  **67316 Carlsberg (DE)**
• **KOWALCZYK, Jörg**
  **67304 Eisenberg-Steinborn (DE)**

(74) Representative: **Schrell, Andreas et al**
**Gleiss Grosse Schrell & Partner**
**Patentanwälte Rechtsanwälte**
**Leitzstrasse 45**
**70469 Stuttgart (DE)**

(56) References cited:
**EP-A- 0 625 311**    **WO-A-00/38532**
**WO-A-01/15545**    **WO-A-01/56398**
**WO-A-03/000068**    **FR-A- 2 464 656**
**US-A- 5 527 542**

**Description**

The present invention relates to a pan coating process and to coated products produced thereby.

In pan coating, or panning, technology there are a variety of processes, such as hard coating (with or without addition of powder), soft coating (always with addition of powder in large amount), solution coating (with or without addition of powder), and suspension coating (with or without addition of powder).

Panning processes are extremely lengthy operations, and usually run in the following order: a) introduction of coating medium, b) distribution, c) optional powder addition, and d) drying. These operating steps are repeated frequently (80-120 times) and in that way layers are gradually built up on the material for coating. In the course of this operation there are changes in amounts applied, distribution times, number of cycles in the individual phases, and drying times in the individual phases.

A constant concern on the part of the skilled worker is to produce a good product in a short time. In spite of this no success has been achieved to date in obtaining distinct accelerations of the process.

Since it is necessary to carry out repeated evaporation of water and, at the same time, to prevent the material for coating sticking to itself and/or to the apparatus, it is not possible to spray arbitrarily large quantities of solution or suspension onto said material. As a result, the duration of the panning operations is lengthy and uneconomic.

WO-A-03/000068 discloses a pan-coating method to produce sugar-free chewing gums using a maltitol-containing syrup and wherein the coated chewing gum cores are dusted with a maltitol powder.

A process which attempts to circumvent these disadvantages is the Lycoat process (EP 0 625 311 B1), which uses the polyol maltitol.

In a corporate text (The World of Ingredients, October 1999, page 59) this innovative process is contrasted with the standard process. That text describes a time saving: from 3 hours 30 minutes to 2 hours and 30 minutes. The comparison was conducted in a Dumoulin TVV 600 pan coater with 5 kg of centers.

The coating time required when the Lycoat process was repeated in a Driacoater DRC 500/600 Vario with 7.5 kg of centers was 3 hours and 19 minutes.

WO 00/38532 describes the addition of isomalt in powder form, the amount of powder being (example A: 0.23 kg times 15 = 3.45 kg) or in the case of example 3 syrup 7: 8.1 kg; this is 7.8% or 17.3%, respectively, of the total amount of isomalt.

A disadvantage of the two above teachings is that the surfaces of the coated products produced by these two processes are rough and that colored pan-coated candies become patchy and/or it is not possible to achieve adequate reductions in the coating times.

WO 00/38532 describes a maximum time saving from 3 hours 33 minutes to 2 hours 27 minutes, in other words a saving of 1 hour and 6 minutes or 31%. This relates only to the actual panning operation.

A considerable disadvantage of the process described in WO 00/38532 is the use of two different syrups. In the case of new plant, this means higher investment costs and a more complicated production operation that is more susceptible to faults.

On both economic and technological grounds, therefore, there is an urgent need to produce in as short a time as possible and with minimum cost and inconvenience a smooth, crunchy, readily colorable, coated product with high storage stability and whose coating does not tend to absorb water from the atmosphere.

The present invention provides a process according to claim 1, in particular a process for producing pan-coated products, especially sugar-free products, comprising a core, a sugar-free core for example, and a non-hygroscopic - preferably sugar-free - coating, the coating consisting of or comprising at least one, preferably two or more, layer(s), in which a coating medium comprising a solution or suspension of one or more polyols is prepared and in a first step a) this coating medium is then applied, in particular partially, to the core and then in a second step b) one or more polyols in powder dry form are applied to the coated core, in particular the dragees, i.e. the coated cores are dusted with a comparatively large amount of one or more polyols in powder form, followed by a third step c) of drying at from 20°C to 80°C, and in a particularly preferred embodiment the process sequence of applying the coating medium, subsequently applying, in particular dusting with, one or more polyols in powder form and drying at from 20°C to 80°C, preferably from 25°C to 50°C, can be carried out more than once, in particular from 5 to 50 times, in particular from 10 to 50 times, preferably from 20 to 40 times. In accordance with the present invention, a coating medium comprising a solution or suspension of one or more polyols is prepared, applied to a core and dusted with large amounts of one or more polyols in powder form and the layer obtained is dried, it being possible for this process sequence to be repeated, in particular, for example, from 10 to 50 times, preferably from 20 to 40 times. The invention provides an aforementioned process in which the amount of one or more polyols in powder form that is used for dusting the applied layer or layers is from 30% to 75% by weight, preferably from 30% to 60% by weight, in particular from 50% to 60% by weight, based in each case on the total solids content of all of the polyols applied in the coating, i.e., in all of the layers. In a particularly preferred embodiment the amount of one or more polyols in powder form that is used for dusting the applied layer or layers is from 30, 35, 40, 45, 50, 55, 60, 65 or 70% to 75% by weight, in particular from 35% to 75%, more preferably from 40% to 75% and most preferably from 45%, in particular 50% to 75% by weight, based in each case on the total solids content of all of the polyols applied in the coating, i.e., in the sum of all the layers.

In a further particularly preferred embodiment the amount of one or more polyols in powder form that is used for dusting the applied layer or layers is from 30, in particular from 40 to 45, 50, 55, 60 or 70% by weight and most preferably from 40 to 55% by weight, based in each case on the total solids content of all of the polyols applied in the coating, that means in the sum of all layer:

In a particularly preferred embodiment, steps a), b) and c) indicated above are performed subsequently to each other, in particular in the given order. In a further preferred embodiment of the present invention, steps a), b) and c) are performed simultaneously. In a further preferred embodiment of the present invention steps a) and b) are performed simultaneously, followed by step c). In a further preferred embodiment of the present invention steps a) and c) are done simultaneously. In another preferred embodiment of the present invention steps a) and c) are performed simultaneously followed by step b). It is also possible to first carry out step a) and then to simultaneously carry out steps b) and c). Of course it is also possible to carry out step a) once or more than once, followed by once carrying out step b), followed by carrying out one or more times step a) and so on.

In a particularly preferred embodiment the core of the pan-coated product is a chewing gum core or center or pillow. As will be appreciated, however, consideration may also be given to selecting, as the core, a nut, hard or soft caramels, hard or soft snack articles, other confectionery, a tablet, a compact or another product suitable for pan coating, such as animal feed, pesticide-containing body, herbicide-containing body, catalyst, laundry detergent, etc. These cores may in a particularly preferred embodiment be composed of or contain sugar free components, such as sugar alcohols like isomalt, maltitol, xylitol, erythritol, mannitol, sorbitol, isomalt GS or contain any one of these compounds.

A particularly preferred embodiment provides for the amount of polyol, or two or more polyols, used in powder form for dusting to be from 30% to 60% by weight, in particular from 50% to 60% by weight, preferably from 30, 35, 40, 45, 50, 55, 60, 65 or 70% to 75% by weight, in particular from 35% to 75%, in particular from 40%, more preferably from 45 or 50% to 75% by weight (based in each case on the total solids content of the total amount of polyol applied to the core; that is, in the sum of all layers). In a further particularly preferred embodiment the amount of one or more polyols in powder form that is used for dusting the applied layer or layers is from 30, in particular from 40 to 45, 50, 55, 60 or 70% by weight and most preferably from 40 to 55% by weight, based on each case on the total solids content of all of the polyols applied in the coating, that means in the sum of all layers.

The process of the invention comprises preparing a pan-coating medium, i.e., a solution or suspension, for example, a mixture of a dissolved polyol and, where appropriate, an undissolved polyol (also referred to as suspension constituent), at elevated temperature, preferably from 25°C to 90°C, preferably from 40 to 80°C for example, preferably from 45 to 55°C, and, after the application or distribution phase on the core that is to be coated, dusting the coated core with substantially larger amounts of a fine polyol powder. Moreover, the temperature of the drying air is higher than in standard processes. The frequency of addition and the amount of the powder is adapted to the corresponding polyol in customary fashion.

Surprisingly, in this process, hard, smooth, readily colorable, and crunchy products are obtained in combination with an extremely rapid layer buildup. The present invention therefore provides in a type of a "soft coating process" hard coated products, i.e. a coated product having a hard and crunchy coating. The products of the present invention furthermore are improved over the art insofar, as that they have an excellent shelf life, i.e. improved storage stability.

It is also surprising that, in spite of the elevated drying air temperature preferred in accordance with the invention, namely from 20 to 80°C, preferably from 25 to 50°C, the temperature-sensitive centers in the case of chewing gums (softening temperature about 30°C) remain dimensionally stable.

In a particularly preferred embodiment of the present invention, the drying air temperature is increased, preferably for a short time, at the end of the coating process.

The percentage fraction of the polyol added in powder form, at preferably > 50%, based on the total solids content of all the polyols applied in the coating, is up to three times as high as the proportion in WO 00/38532 (example 3) and almost seven times as high as in example A of WO 00/38532, which results in an extraordinarily economic procedure.

The time saving in the process of the invention amounts to 53% (as compared with example 3 of WO 00/38532) and even 68% as compared with example A: in other words, in those cases where to date one coating operation was possible, now two or three coating operations are possible in the same unit time.

This is an extraordinarily great advantage over the prior art.

Detailed description of the process

The centers to be coated are placed, in one preferred embodiment, in a pan coater and where appropriate are first freed from adhering dust by agitation and air suction withdrawal.

The preparation of the coating medium, i.e. the coating solution or suspension is accomplished by dissolving

EP 1 804 591 B1

the polyol without residue at elevated temperature, adding other, optional ingredients, such as gum arabic, a compound modifying the viscosity and/or surface tension of the coating medium, color, flavor, active substances, pharmaceutical substances, intensive sweeteners, nutraceuticals, tooth mineralizing agents and the like. Moreover, where appropriate, the fraction of polyol envisaged as a suspension constituent is added.

In a preferred embodiment of the present invention, the solid content of the coating medium is from 30% to 90%, in particular 50% to 70%, preferably from 55% to 60%.

This coating solution or suspension is stirred at elevated temperature - for example, from 25°C to 90°C, in particular from 40°C to 80°C, preferably from 45°C to 55°C. The coating medium is in a particularly preferred embodiment applied, in particular by spraying, for example in the form of a spraying stream or spray beam and/or preferably in portions, to the agitated cores or centers.

After the application phases, especially spray application phases, the polyol used as dusting powder is, in a particularly preferred embodiment of the present invention scattered uniformly over the agitated centers, it being possible for the amounts to be increased in the course of the operation and for these amounts to total the above-mentioned amount, for example 30% to 75%, in particular 30 to 60%, most preferred from 50 to 60%, in particular from 30, 35, 40, 45, 50, 55, 60, 65 or 70% to 75% by weight, in particular from 35% to 75% of the polyol used and applied in the panning operation as a whole. In a further particularly preferred embodiment the amount of one or more polyols in powder form that is used for dusting the applied layer or layers is in particular from 40 to 45, 50, 55, 60 or 70% by weight and most preferably from 40 to 55% by weight, based on each case on the total solids content of all of the polyols applied in the coating, that means in the sum of all layers.

This amount is far higher than in processes described to date. As constituent of the powder added in the course of the present process as dusting powder an anticaking compound, a flowability enhancer or a free-flow agent may be used together with the polyol.

Since the temperature of the coating medium is increased in a particularly preferred embodiment of the present invention to more than 40°C, in particular more than 50°C, preferably more than 55°C, and the drying-air temperature is in a further preferred embodiment of the present invention likewise at this high level, it is possible to apply large amounts per unit time of solids to the material to be pan coated; at the same time a large amount of solids is applied rapidly to the centers, as a result of the addition of powder.

Advantageously, in one preferred embodiment, the amount applied of liquid coating medium and/or the amount applied of powder are increased successively in the course of the process.

In the present invention, the polyol, in particular the non-hygroscopic polyol used may be a sugar alcohol or a sugar substitute, in particular it can be a disaccharide alcohol, most preferably a non-hygroscopic disaccharide alcohol.

The non-hygroscopic polyol used can be, for example, 1,6-GPS (6-O-α-D-glucopyranosyl-D-sorbitol), 1,1-GPM (1-O-α-D-glucopyranosyl-D-mannitol), isomalt, isomalt ST, isomalt GS, isomalt, LM, erythritol, mannitol or mixtures thereof. Furthermore, 1,1-GPS (1-O-α-D-glucopyranosyl-D-sorbit) or xylitol may also be used as a polyol in the present invention. In the context of the present invention a hygroscopic sugar alcohol is for example sorbitol, which in a preferred embodiment of the present invention is not used in the coating medium and as a powder dry form, preferably is not present in the coating of the product, preferably is not present in an amount of 5,0% or more, in particular not present in an amount of 1,0% by weight or more (based on the total solids content of polyol used in the coating).

Thus, in a preferred embodiment of the present invention the polyol used is isomalt, that means is a nearly equimolar mixture of 1,6-GPS and 1,1-GPM consisting of preferably 43 to 57% 1,6-GPS and 57 to 43% 1,1-GPM. In a further preferred embodiment of the present invention the polyol can be a mixture of 1,6-GPS and 1,1-GPM together with other polyols, for instance with 1,1-GPS. These mixtures are for instance described in EP 0 625 578 B1.

In a further more preferred embodiment of the present invention, 1,6-GPS-enriched mixtures comprising 1,6-GPS and 1,1-GPM are used, in particular those mixtures which consist of more than 57 to 99% 1,6-GS and less than 47 to 1% 1,1-GPM. An example therefore is isomalt GS, which is a mixture comprising 75 to 80% (w/w) 1,6-GPS and 25 to 20% (w/w) 1,1-GPM. In a further preferred embodiment of the present invention 1,1-GPM-enriched mixtures are used, which preferably consist of more than 57 to 99% 1,1-GPM and less than 47 to 1% 1,6-GPS. These mixtures are for instance described in DE 195 32 396 C2 (all %-data given in the present teaching are weight-% unless otherwise indicated).

In a particularly preferred embodiment of the present invention, the only polyol, in particular sugar alcohol used in the coating medium or used as powder in the pan-coating process, in particular present in the coating, is a polyol selected from the group of 1,1-GPM, 1,6-GPS, isomalt, isomalt ST, isomalt GS, isomalt LM, xylitol or mixtures thereof. Thus, the invention foresees that no further polyols, in particular no further sugar alcohols are used in the coating medium and in the powder, particularly are present in the coating of the product. In a particularly preferred embodiment the polyol, in particular sugar alkohol selected from the group consisting of 1,6-GPS, 1,1-GPM, 1,1-GPS, isomalt, isomalt ST, isomalt GS, isomalt LM and xylitol is not only the only polyol used in the coating medium and used in form of a powder particularly in the coating, but is also the only sweetening agents used in the coating medium and used in form of a powder, particularly in the coating, in particular is the only sweetening agents which in addition to sweetness also provides a body to the product or coating. In a further preferred embodiment, the polyol in powder form used in the coating process is the only substance used in the powder, i.e. the powder solely consists of the polyol used.

Although sugarless products are preferred, it is also possible to use sugars such as isomaltulose in the coating as a "polyol" substitute or in addition to the polyol. Thus, in the present invention the term polyol also comprises isomaltulose. In another preferred embodiment the term polyol relates to sugar alcohols excluding all sugars such as isomaltulose.

In a particularly preferred embodiment, however, the present invention foresees a pan coating process and coatings obtained thereby which are free of hygroscopic substances, in particular are free of sorbitol. In a further preferred embodiment the present process and the coatings obtained thereby are free of hygroscopic non-sugar materials, such as sorbitol, and are free of mannitol or hydrogenated starch hydrolysate or mixtures thereof. Thus, in a preferred embodiment of the present invention, the coatings are free of sorbitol, are free of hydrogenated starch hydrolysate or mixtures thereof, and are also free of binding and dispersing agents, in particular are free of any hygroscopic material.

In a further preferred embodiment the process and the coating, preferably the overall products, of the present invention are free of sugars such as sucrose, and therefore can be termed "sugarless" products and are free of hygroscopic substances.

According to one embodiment of the present invention, the polyol or polyols used in the coating medium may be the same as the polyol or polyols used in powder form. In another preferred embodiment, the polyol or polyols used in the coating medium may be different to the one or more polyols used in powder form.

A preferred particle size distribution of the polyol added in powder form is advantageously selected from the range from 90% < 50 $\mu$m to 90% < 100 $\mu$m, i.e. is for instance 90%. < 50 $\mu$m, 90% < 60 $\mu$m, 90% < 70 $\mu$m, 90% < 80 $\mu$m and 90% < 90 $\mu$m.

In one preferred embodiment the powder may be composed of isomalt ST-PA, i.e. isomalt ST with particles 90% < 50 $\mu$m or isomalt GS-PF (particle size: 90<100 $\mu$m) or GS-PA, i.e. isomalt GS with particles 90% < 50 $\mu$m.

The powder used in the present invention may in a preferred embodiment of the present invention also comprise further additives, auch as a flavour, colour, pharmaceutically active substance, tooth mineralizing agent, nutraceutical, intensive sweetener, a free-flow agent, a flowability enhancer, e.g. $SiO_2$, tricalcium phosphate and/or an anticaking compound.

In a further preferred embodiment of the present invention, the invention foresees that a first group of layers of a particular composition is applied to the cores, and subsequently a second group of layers with a different composition is applied on top of the first group of layers. For instance, the second group of layers may, in contrast to the first group of layers, contain a colour and/or flavour and/or a pharmaceutical composition and/or a nutraceutical or the like. In a preferred embodiment of the present invention, it is of course also possible that more than two groups of layers with different compositions, such as 3, 4, 5, 6 or more differently composed layers are applied onto the core.

In a further preferred embodiment of the present invention, the polyol or sugar used for the second type of layer is selected from the group consisting of isomaltulose, erythritol, and xyltitol.

As a result of the large amounts of powder added, saving on panning time, the number of applications is also much lower, so that it is possible to obtain smooth layers with fewer than 30 applications.

Surprisingly the resultant coating layer is smooth, hard and crunchy.

The time saving in comparison with the process of EP 0 625 311 B1, for a comparable proportion of coating, is approximately 50% and, in comparison with the process of WO 00/38532, about 35%. This means that in production plant it is possible to increase the throughput by about 30%-50%, which in the case of these batchwise production operations leads to considerable cost savings.

As a result of the inventively improved preferred addition of a fine powder in dry form (in contradistinction to its addition in the suspension), the fine crystals are retained. It is known that isomalt is composed of 1,1-GPM and 1,6-GPS. Solids of these two substances behave differently in aqueous solutions: in other words, the two different crystals show markedly different solution and crystallization behavior.

This means that the particle size and the composition of the particulate solids are different in liquid pan-coating media, depending on the time and the temperature.

It cannot be ruled out that, as a result of long residence times in containers and lines, for example, as a result of concentration or dilution processes, some of the crystals will grow and/or some will dissolve. In the process of the invention this risk is reduced, since the overall panning operation is much quicker.

In contradistinction to the prior art it is also unnecessary to use two different coating media. It is entirely sufficient to use a liquid coating medium, in other words a solution or suspension, and a powder of suitable particle size distribution in the process of the invention.

In the case of soft panning, it is also the case that large amounts of a sugar or sugar alcohol in powder form are applied in alternation with a liquid charge to the centers to be coated. In contradistinction to the process of the invention, however, neither temperature nor drying air is used in soft coating, so that 7%-10% moisture is still present in the end product. This is also necessary, since the end product of soft coating is supposed to be soft to the bite.

Moreover, in the case of soft coating, only about 3-10 panning layers are applied.

The new process is therefore different both from hard coating and from soft coating.

The specific conditions of the process of the invention (identity of powder, amount of powder, temperature of the liquid phase and of the drying air) result, however, in pan-coated products which exhibit a surprisingly hard, crunchy, and smooth surface.

The time advantage of the process of the invention is not limited only to the actual panning operation (reduced evaporation of water) but also extends to the preparation of the coating medium. Since less polyol has to be dissolved there is a time and cost saving here as well. Contrary to the description in WO 00/38532, where it says:

"Sometimes dry charging can be used in hard panning, but is usually very limited in the amount of dry charge material and used for a few applications during the process.", dusting in the process of the invention is carried out with a large amount of powder and in many cases during pan coating.

Highly concentrated solutions, large amounts for application, and rapid crystallization are considered causes of problems in hard coating (sticking; rough, nonuniform surfaces) (source: Technologie der Herstellung von Hart-, Weich- und Schokodragees, Frank Perchtold, ZDS Solingen/D in Einführung Herstelltechnologie Dragees, ZDS, October 9-13, 2000). Suggested remedies include the following:

- heat or dilute solution
- dry more slowly
- dilute application solution
- lower temperature of centers
- reduce viscosity
- reduce amount of solution per application
- extend drying time between applications.

In the process of the invention the opposite is done in respect of almost every point:

- the solution remains undiluted at the same temperature
- drying is carried out quicker than usual
- the application medium is and remains highly concentrated
- the temperature of the drying air and hence that of the centers is actually increased during the process
- the viscosity is not changed
- the amount per application is increased
- and the drying time is much shorter than with standard processes.

As can readily be seen, the process of the invention operates to a large extent counter to the prior art.

It is therefore all the more surprising that the products clearly exhibit the properties of a hard-coated product.

Another advantage according to the invention is the possibility to coat badly formed / pressed centers or hard boiled candies or other unevenly formed compounds with the aid of large amounts of powder to get smooth and even products. Flawed parts on surfaces or on edges can be smoothed out to plane and even surface areas. This allows faster, easier production conditions for coated products. Even bodies with manufacturing determined roughness can be coated according to the invention yielding smooth, beautiful products.

Due to the large amounts of powder used in the layer-building phase, the temperature of the drying air can be chosen very high, as the powder will prevent the overheating of the centers.

The drying during the coating process can in a particularly preferred embodiment of the present invention be done by a co current stream, also known as direct flow, which means that the drying air is led in the same direction as the spraying stream through the dragee bed or pan coater or, in another preferred embodiment of the present invention, by counter flow, also known as counter current stream, i.e. that the drying air is led in the opposite direction to the spraying stream through the dragee bed or pan coater.

In a particularly preferred process of the present invention, the latter method, i.e. the counter flow of drying air to spraying stream is performed during the dry charge additions, i.e. during the layer building phase in step b). Thus, steps a), b) and c) can, in a particularly preferred embodiment of the present invention be performed simultaneously. The counter flow of the drying air minimizes the loss of powder.

In another preferred embodiment of the present invention, the first mentioned method, i.e. the direct flow of drying air to spraying stream is performed during the smoothing phase, i.e. step c) is done simultaneously with step a).

In another embodiment of the present invention the mixing of dragees and powder in step b) is even more improved using one or more baffles in the pan coater or coating drum. In a further preferred embodiment of the present invention the application of the coating medium in step a) and the application of the powder in step b) is done simultaneously.

To shorten the duration for the application of the coating medium and the powder to the core, these applications can be achieved by simultaneous addition of both or, more preferred, by a time-lagged application of the powder after the beginning of the application of the liquid coating medium. The application of the coating medium in step a), i.e. in particular the spray beam should, in a preferred embodiment of the present invention hit the cores, particularly the moved dragee bed before process step b), i.e. the powder addition, such that the wetted centers can pick up the powder particles.

Another design of the invention is the use of a low concentrated liquid coating medium, which can be used - from beginning of the coating process or after the layer building phase in step a) and b) with big amounts of powder - as single or smoothing sirup.

The present invention also relates to a product which is obtainable according to any one of the above processes of the present invention, in particular to coated products, in particular sugar free coated products or coated products with a sugar free coating, which are for example confectioneries, nuts, hard and soft caramels, hard and soft snack articles, tablets, compacts and chewing gum candies.

Further preferred embodiments are the subject matter of the subclaims.

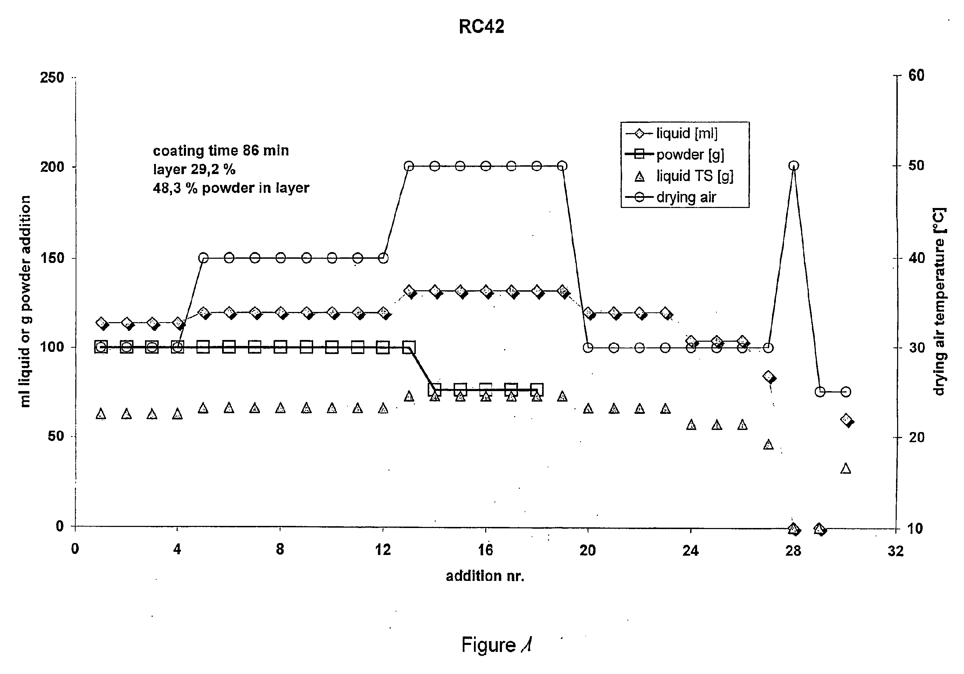

The invention is further exemplified by reference to the examples and the figure.

The figure shows a coating scheme of the present invention.

In the present description, claims and examples, the following terms, abbreviations and calculating schemes were used:

| | |
|---|---|
| Total Fluid Amount of a coating solution or -suspension: | **TFA** |
| Dry substance content of the TFA: | **DSTFA** |
| Total Powder Addition: | **TPA** |
| (Total) Center Weight: | **(T)CW** |
| (Total) Dragee End Weight: | **(T)DEW** |
| (Total) Layer Weight [(T)DEW - (T)CW]: | **(T)LW** |
| Percentage Layer Portion: | **PLP** |
| (Total) Loss of the coating material (fluid and as powder): | **TL** |
| Powder Portion in the Dragee Layer (=amount of polyol in powder form based on total solids content of the polyol in the coating): | **PPDL** |
| Percentage Powder Portion in the Dragee Layer | **PPPDL** |

(=percentage amount of polyol in powder form based on total solids content of the polyol in the coating Legend:

**TFA** means the total amount of added/sprayed coating solution or suspension in all phases.

**DSTFA** means the **TFA** without the water-fraction **TPA** means the total powder amount, which is added to the (wet) centers The **TCW** is the mass of the centers to be coated (number of centers multiplied by the mass of one center); the **CW** is the average mass of one center **TDEW** means the mass of the finished dragees (total weight of the centers plus total weight of the dragee layers); **DEW** is the average weight of one dragee).

The **TLW** is the difference of the weights of all dragees minus the weight of all centers; the **LW** is the difference of the average weight of one dragee minus the average weight of one center.

The **PLP** is the quotient of the total layer weight (*100) and the total dragee end weight. It is also possible to count as follows:

**PLP** = x pieces * **LW** * 100 / x pieces * **DEW;** the percentage layer portion can be counted by division of the difference of the weight of the end product minus the center weight and the end product weight; this value is multiplied by 100. Or by accounting a not to small number x of finished dragees with the same number of centers.

**TL** is the difference of (**DSTFA** + **TPA**) - **TLW**; the total loss can be ascribed to abrasion (in the drying air) and coating of inner apparatus parts.

The **PPDL** is defined by the following **Formula 1** :

$$PPDL\ [kg] = \frac{TPA * TLW}{TPA + DSTFA - TL}\ [kg]$$

and in words:

$$PPDL\ [kg] = \frac{total\ powder\ addition * total\ layer\ weight}{total\ powder\ addition + DS\ of\ the\ total\ fluid\ amount - total\ loss}$$

The percentage powder portion in the layer is (**Formula 2**)

$$PPPDL\ [\%] = \frac{PPDL}{TLW} * 100 = \frac{powder\ portion\ of\ the\ dragee\ layer}{total\ layer\ weight} * 100\ [\%]$$

Calculation scheme (exemplary):

In a coating process 60,00 kg centers (**TCW**) were coated to an end product weight of 90,00 kg (**TDEW**), resulting in a total layer weight of 30,00 kg (**TLW**). 33,3 % (**PLP**) of the dragee consists of the coating material.
As fluid addition, i.e. coating medium, 58,70 kg (**TFA**) with 66 % DS (dry substance), i.e. 38,75 kg dry substance (**DSTFA**) were used. As powder addition totally 8,10 kg (**TPA**) were consumed. The total addition amount in the coating process is therefore 46,85 kg dry substance. The powder portion in the dragee layer yields

$$(8,10\ /\ 46,85) * 30,00 = 5,19\ kg\ (\textbf{PPDL})$$

and the percentage powder portion in the dragee layer: (**PPDL** / **TLW**) * 100

$$5,19\ /\ 30,00 * 100 = \textbf{17,3 \%} (\textbf{PPPDL}).$$

The total loss (**TL**) of added material which is thereforenot present in the coated products in this example is 46,85 - 30,00 =16,85 kg.
If one does not consider the inevitable loss of added coating medium and powder (for example due to remaining rests in the pan-coating machinery) the total powder addition 8,10 kg (**TPA**) and the total layer weight 30,00 kg (**TLW**) as follows, the result

$$8,10\ /\ 30,00 = \textbf{27,0 \%} (\textbf{PPPDL})$$

would pretend a much to high powder portion in the dragee layer; inevitable losses would be assigned to the fluid additions solely.
In case of minor or no losses both **PPPDL**-value will give the ratio of

$$\textbf{TPA} * 100\ /\ \textbf{TLW}\ (= \textbf{TPA} + \textbf{DSTFA})$$

because in the above **Formula 1** the **TLW** is equal to **TPA** + **DSTFA**. In the example the limit is

$$8,10 / 54,95 = 14,7 \%$$

which is the ratio of the powder portion in the total coating material. The following examples illustrate the invention without limiting its scope.

Example 1:

4.365 kg of isomalt GS (75% 1,6-GPS and 25% 1,1-GPM, w/w) were dissolved in 2.9l of water at 65°C and 2.215 kg of isomalt ST-PF (50% 1,6-GPS and 50% 1,1-GPM, particle size: 90% < 100 $\mu$m) were added, in the course of which the temperature lowered somewhat. Additionally gum arabic, 0.41 g (in the form of a 50% strength solution), and 50 g of $TiO_2$ were added to the liquid phase. This pan-coating suspension was applied by spraying to 7.5 kg of chewing gum centers (pillow-shaped). During the distribution periods a total of 2.18 kg of isomalt ST-PA (50% 1,6-GPS and 50% 1,1-GPM, particle size 90% < 50 $\mu$m) was dusted uniformly over the agitated, moist centers, and subsequently drying air at 25-50°C was passed through the bed of candies. The table below summarizes the phases and amounts applied (in liquid form and as powder).

| Phase | 1 | 2 | 3 | 4 | 5 | 6 | 7 | 8 | 9 |
|---|---|---|---|---|---|---|---|---|---|
| Number of cycles | 1 | 6 | 3 | 5 | 2 | 5 | 2 | 1 | 1 |
| Amount of solution or suspension [ml] | 130 | 100 | 120 | 150 | 120 | 120 | 75 | 60 | 50 |
| Amount of powder [g] | 130 | 100 | 150 | 200 | - | - | - | - | - |
| Distribution time [sec] | 60 | 60 | 60 | 60 | 90 | 72 | 72 | 72 | 60 |
| Drying time [sec] | 150 | 90 | 72 | 90 | 120 | 90 | 60 | 90 | 90 |
| Air temperature [°C] | 25 | 30 | 35 | 40 | 50 | 25 | 25 | 25 | 25 |

The total panning time (without polishing) is 69 minutes; the coating fraction amounts to 33% of the candy weight. The product is crunchy and has a smooth surface.

Example 2:

Driacoater DRC 500/600 Vario, amount of centers 7.5 kg

| Application | Liquid coating medium [ml] | Powder [g] | Hypothetical amount of powder [g] in analogy to WO 00/38532 |
|---|---|---|---|
| 1 | 130 | 130 | 75 |
| 2 | 100 | 100 | 75 |
| 3 | 100 | 100 | 112.5 |
| 4 | 100 | 100 | 112-.5 |
| 5 | 100 | 100 | 112.5 |
| 6 | 100 | 100 | 75 |
| 7 | 100 | 100 | 75 |
| 8 | 120 | 150 | 75 |
| 9 | 120 | 150 | 75 |
| 10 | 120 | 150 | 75 |
| 11 | 150 | 200 | 75 |
| 12 | 150 | 200 | 75 |
| 13 | 150 | 200 | - |
| 14 | 150 | 200 | - |
| 15 | 150 | 200 | - |

(continued)

| Application | Liquid coating medium [ml] | Powder [g] | Hypothetical amount of powder [g] in analogy to WO 00/38532 |
|---|---|---|---|
| 16 | 120 | - | - |
| 17 | 120 | - | - |
| 18 | 120 | - | - |
| 19 | 120 | - | - |
| 20 | 120 | - | - |
| 21 | 120 | - | - |
| 22 | 120 | - | - |
| 23 | 75 | - | - |
| 24 | 75 | - | - |
| 25 | 60 | - | - |
| 26 | 50 | - | - |
| Total: 1.01 kg Total: 26 charges with 2.00 kg of TS (from coating medium) and 2.18 kg of powder 52% of the amount of polyol is applied as powder | | | |

Example 3 (comparative):

Lycoat-process (The world of ingredients, 1999)

| phase | traditional | syrup [g] | syrup DS [g] | powder [g] | Lycoat | syrup [g] | syrup-DS [g] | powder [g] |
|---|---|---|---|---|---|---|---|---|
| 1 | | 50 | 35 | 100 | | 200 | 140 | 120 |
| 2 | | 350 | 245 | | | 240 | 168 | 120 |
| 3 | | 600 | 420 | | | 490 | 343 | 105 |
| 4 | | 150 | 105 | | | 150 | 105 | 30 |
| 5 | | 700 | 490 | | | 225 | 158 | 45 |
| 6 | | 1200 | 840 | | | 240 | 168 | 45 |
| 7 | | 80 | 56 | | | 1020 | 714 | |
| 8 | | | | | | 90 | 63 | |
| Sum: | | | 2191 | 100 | | | 1859 | 465 |

In the Lycoat-process 20,0 % of the total polyol amount is used as powder charge.

Example 4 (comparative):

In the course of this example, example 3 of WO 00/38532 was analysed (center weight 60 kg).

| | syrup 7: | dry charge | syrup 8: |
|---|---|---|---|
| 1 | 1. application | 0,6 kg | |
| 2 | 2. application | 0,6 kg | |
| 3 | 3. application | 0,9 kg | |
| 4 | 4. application | 0,9 kg | |
| 5 | 5. application | 0,9 kg | |
| 6 | 6. application | 0,6 kg | |
| 7 | 7. application | 0,6 kg | |

(continued)

|  | syrup 7: | dry charge | syrup 8: |
|---|---|---|---|
| 8 | 8. application | 0,6 kg | |
| 9 | 9. application | 0,6 kg | |
| 10 | 10. application | 0,6 kg | |
| 11 | 11. application | 0,6 kg | |
| 12 | 12. application | 0,6 kg | |
| 13 | | - | 1. application |
| 14 | | - | 2. application |
| 15 | | - | 3. application |
| 16 | | - | 4. application |
| 17 | | - | 5. application |
| 18 | | - | 6. application |
| 19 | | - | 7. application |
| 20 | | - | 8. application |
| 21 | | - | 9. application |
| 22 | | - | 10. application |
| 23 | | - | 11. application |
| 24 | | - | 12. application |
| 25 | | - | 13. application |
| 26 | | - | 14. application |
| 27 | | - | 15. application |
| 28 | | - | 16. application |
| 29 | | - | 17. application |
| 30 | | - | 18. application |
| 31 | 13. application | - | |
| 32 | 14. application | - | |
| 33 | 15. application | - | |
| 34 | 16. application | - | |
| 35 | 17. application | - | |
| 36 | 18. application | - | |

Sum: 36 applications with 38,75 kg DS (the amount of 38,75 kg was taken from table 1, example 3 on page 16 of WO 00/38532), and 8,1 kg dry charge have been performed, i.e. 17,3 % (PPPDL) of the polyols are used in the form of a dry charge.

Example 5:

Coating of hard boiled candies from maltitol

7,0 kg hard boiled candies from maltitol were coated in a Driacoater. An isomalt GS solution (75% 1,6-GPS and 25% 1,1-GPM, w/w) with 65°Bx and 55°C was used as liquid coating medium. In total 3028 g of the solution, i.e. 1968 g dry substance was used and in total 2340 g isomalt ST-PR (50% 1,6-GPS and 50% 1,1-GPM, particle size < 100 μm (w/w) powder. The single powder additions were: 1 x 300 g (phase 1), 6 x 150 g (phase 2), 3 x 180 g (phase 3) und 3 x 200 g (phase 4).
The coating time was 72 min.
The percentage powder portion of the process is calculated to 54,3 %.
The end product shows a smooth and even surface. The proportion of the layer in relation to the coated end product was 38 %.

Example 6:

A solution of isomalt GS (75% 1,6-GPS and 25% 1,1-GPM, w/w) with the following recipe was used at 60°C for coating of 7,5 kg cushion-shaped centers in a Vario 500/600 coater:

| | |
|---|---|
| 55,00% | Isomalt GS |
| 4,10 % | Gum arabic- solution (50 % d.s.) |
| 0,05 % | Acesulfam K |
| 0,05 % | Aspartame |
| 1,00 % | $TiO_2$ |
| 39.80 % | Water |
| 100,00 % | |
| 25 g | peppermint flavour |
| 2930 g | Isomalt GS-PA (as dry charge) |

The overall coating time was 69 min, the percentage layer amount (PLP) was 36,3 %. The layer was build in 26 cycles.

The ratio of solid to liquid Isomalt used was 2930 g / 1471 g =1,99.

The amount of solid Isomalt in the coating material (PPPDL) is 2930 g/4400 g = 66,6 %. The dragees have a smooth even and crunchy surface.

Example 7:

A solution of isomalt GS (75% 1,6-GPS and 25% 1,1-GPM, w/w) with the following recipe was used at 60°C for coating of 7,5 kg cushion-shaped centers in a Vario 500/600 coater:

| | |
|---|---|
| 55,00 % | Isomalt GS |
| 4,10 % | Gum arabic- solution (50 % d.s.) |
| 0,05% | Acesulfam K |
| 0,05% | Aspartame |
| 0,06 % | Apple Green Shade colour |
| 40,74 % | Water |
| 100,00 % | |
| 2180 g | Isomalt ST-PA with optionally 0,1 %$SiO_2$ (as dry charge) |

The overall coating time was 64 min, the percentage layer amount (PLP) was 29,0 %. The layer was build in 25 cycles.

The ratio of solid to liquid Isomalt used was 2180 g/ 1262 g =1,73.

The amount of solid Isomalt in the coating material (PPPDL) is 2180 g / 3442 g = 63,3 %. The dragees have a smooth, even and crunchy surface.

Example 8:

A solution of Isomalt GS (75% 1,6-GPS and 25% 1,1-GPM, w/w) with the following recipe was used at 60°C for coating of 7,5 kg cushion-shaped centers in a Vario 500/600 coater:

| | |
|---|---|
| 55,00 % | Isomalt GS |
| 4,10 % | Gum arabic- solution (50 % d.s.) |
| 0,05 % | Acesulfam K |
| 0,05 % | Aspartame |
| 0,06% | Allura Red |
| 0,50% | $TiO_2$ |
| 40,24 % | Water |
| 100,00 % | |
| 2580 g | Isomalt ST-PA with optionally 0,1 %$SiO_2$ (as dry charge) |

The overall coating time was 65 min, the percentage layer amount (PLP) was 36,0 %. The layer was build in 23 cycles.

The ratio of solid to liquid Isomalt used was 2580 g / 1326,7 g =1,94.

The amount of solid Isomalt in the coating material (PPPDL) is 2580 g / 3906,6 g = 66,0 %. The dragees have a smooth, even and crunchy surface.

Example 9:

A solution of Isomalt GS (75% 1,6-GPS and 25% 1,1-GPM, w/w) with the following recipe was used at 60°C for coating of 7,5 kg cushion-shaped centers in a Vario 500/600 coater:

| | |
|---|---|
| 55,00 % | Isomalt GS |
| 4,10 % | Gum arabic- solution (50 % d.s.) |
| 0,05 % | Acesulfam K |
| 0,05% | Aspartame |
| 0,01 % | Vegex color yellow |
| 0,50 % | $TiO_2$ |
| 40.29 % | Water |
| 100,00% | |
| 2250 g | Isomalt ST-PA with optionally 0,1 %$SiO_2$ (as dry charge) |

The overall coating time was 53 min, the percentage layer amount (PLP) was 30,1 %. The layer was build in 21 cycles.

The ratio of solid to liquid Isomalt used was 2250 g / 1179,3 g =1,91.

The amount of solid Isomalt in the coating material (PPPDL) is 2250 g / 3429,3 g = 65,6 %. The dragees have a smooth, even and crunchy surface.

Example 10:

A solution of Isomalt GS (75% 1,6-GPS and 25% 1,1-GPM, w/w) with the following recipe was used at 60°C for coating of 7,5 kg cushion-shaped centers in a Vario 500/600 coater:

| | |
|---|---|
| 55,00 % | Isomalt GS |
| 4,10 % | Gum arabic- solution (50 % d.s.) |
| 0,05 % | Acesulfam K |
| 0,05% | Aspartame |
| 0,02 % | natural green color |
| 0,50 % | $TiO_2$ |
| 40.28 % | Water |
| 100,00 % | |
| 2250 g | Isomalt ST-PA with optionally 0,1 %$SiO_2$ (as dry charge) |

The overall coating time was 50 min, the percentage layer amount (PLP) was 30,0 %. The layer was build in 21 cycles.

The ratio of solid to liquid Isomalt used was 2250 g / 1178,2 g = 1,91.

The amount of solid Isomalt in the coating material (PPPDL) is 2250 g / 3429,3 g = 65,6 %. The dragees have a smooth, even and crunchy surface.

Example 11:

In a Driacoater 1600/1,25 with 4 nozzles 3 trials with 316 kg centers each and Isomalt in liquid and powder form were made. For a dragee layer buildup of 33,2 %, 31,1 % and 28,7 % the coating time was 110 min, 108 min and 93 min. The respectively used powder amounts were 52,3 %, 46,0 % and 47,9 %.

Example 12:

Recipe:

| | |
|---|---|
| 5500g | Isomalt GS |
| 3980g | Water |
| 410g | Gum arabic-solution (50%) |
| 100g | $TiO_2$ |
| 5g | Aspartame |
| 5g | Acesulfam K |
| 12g | Curcumin |
| 4g | Eurolake Brilliant Blue |
| 10016g | liquid coating medium |
| 1680g | Isomalt GS-PA in powder form |

| phase | addition | liquid [ml] | powder [g] | liquid TS [g] | drying air [°C] |
|---|---|---|---|---|---|
| 1 | 1 | 114 | 100 | **62,7** | 30 |
| 1 | 2 | 114 | 100 | **62,7** | 30 |
| 1 | 3 | 114 | 100 | **62,7** | 30 |
| 1 | 4 | 114 | 100 | **62,7** | 30 |
| 2 | 5 | 120 | 100 | **66** | 40 |
| 2 | 6 | 120 | 100 | **66** | 40 |
| 2 | 7 | 120 | 100 | **66** | 40 |
| 2 | 8 | 120 | 100 | **66** | 40 |
| 2 | 9 | 120 | 100 | **66** | 40 |
| 2 | 10 | 120 | 100 | **66** | 40 |
| 2 | 11 | 120 | 100 | **66** | 40 |
| 2 | 12 | 120 | 100 | **66** | 40 |
| 3 | 13 | 132 | 100 | **72,6** | 50 |
| 3 | 14 | 132 | 76 | **72,6** | 50 |
| 3 | 15 | 132 | 76 | **72,6** | 50 |
| 3 | 16 | 132 | 76 | **72,6** | 50 |
| 3 | 17 | 132 | 76 | **72,6** | 50 |
| 3 | 18 | 132 | 76 | **72,6** | 50 |
| 3 | 19 | 132 | | **72,6** | 50 |
| 4 | 20 | 120 | | **66** | 30 |
| 4 | 21 | 120 | | **66** | 30 |
| 4 | 22 | 120 | | **66** | 30 |
| 4 | 23 | 120 | | **66** | 30 |
| 5 | 24 | 104 | | **57,2** | 30 |
| 5 | 25 | 104 | | **57,2** | 30 |
| 5 | 26 | 104 | | **57,2** | 30 |
| 6 | 27 | 84 | | **46,2** | 30 |
| 7 | 28 | 0 | | **0** | 50 |
| 8 | 29 | 0 | | **0** | 25 |
| 9 | 30 | 60 | | **33** | 25 |
| Total | | **3276 ml** | **1680 g** | **1801,8 g** | |
| Total dry substance Percentage | | | | **3481,8 g** | |

(continued)

| phase | addition of powder | liquid [ml] | powder [g] 48,3 % | liquid TS [g] | drying air [°C] |
|---|---|---|---|---|---|

7,5 kg of cushion-shaped chewing gum centres were coated with isomalt in a Driacoater Vario 500/600. The temperature of the coating solution was 60°C.

It has to be noted that the quantity of ingredients mentioned in the above recipe (10016g) does not correspond to the amount of fluids (3276 ml) actually applied as a coating, since when conducting such experiments, a significant amount of wastage has to be considered (inevitable losses in containers, pipes etc.). In contrast to this, the amount of powder in the recipe (1680g) corresponds exactly to the amount of powder actually applied (1680g), as the powder is added to the coating bed directly after weighing without any loss.

The coating scheme in the figure shows the quantities of applied substances (liquid coating [ml], dry substance in liquid coating [g] and powder addition [g]) in the various coating phases as well as the drying air temperature and the numbers of coating cycles. The proportional amount of powder in the coating is 48,3%. The proportional amount of coating, calculated from the average weight difference, was 29,2%. The coating time (without wax-polishing) was 86 minutes. One special feature is the short heating at the end of the coating process before wax-polishing.

Example 13:

7,0 kg gum arabic-pregummed, chocolate-coated hazelnuts were coated in a Driacoater Vario 500/600 with the following recipe:

| | | |
|---|---|---|
| 6500 g | 65,6% | Isomalt GS |
| 2980 g | 30,1% | Water |
| 410 g | 4,1% | gum arabic solution (50%) |
| 10 g | 0,1% | Aspartame/Acesulfam K-mixture (1:1) |
| 10 g | 0.1% | Tatrazine |
| | 100% | |
| | | |
| 1100g | | Isomalt GS-PA (as powder/dry charge) |

The solution was kept at 55°C; the powder additions were added in the first eleven additions, with an amount of 100 g powder each (11 times).

The coating time was 157 min, the powder addition in the dragee layer was 32,1%. Due to the temperature-sensitive centres (chocolate) the drying air had a temperature of 20°C. The layer-amount was 29,1 % of the end product.

100 pieces (minus 5 with the lowest weight) each of uncoated, conventionally coated and pieces of this example were compared according to the uniformity of their weights. The average weight of the uncoated centres (chocolate-coated liazelnuts) was 2,562 g with a standard deviation of 0,318 g (=11,1 % relative standard deviation).

The conventionally Isomalt-coated product had an average weight of 3,497 g with a standard deviation of 0,400 g (=11,4 % relative standard deviation).

Dragees according to the inventive process had an average weight of 3,665 g with a standard deviation of 0,396 g (=10,8% relative standard deviation).

This is a clear indication for a smoothing and averaging effect of the inventive process.

**Claims**

1. A process for producing pan-coated products, comprising a core and a non-hygroscopic coating, preferably a sugar-free coating, where the coating comprises at least one layer, preferably two or more up to a large number of layers, and the coating is applied to the core by preparing, as coating medium, a solution or suspension of one or more polyols and in a process step a) applying this coating medium to the core, for the purpose of applying one layer, and then, in a process step b), dusting with one or more polyols in powder form, and subsequently, in a process step c), carrying out drying with air at 20°C-80°C, the amount of the polyol or polyols in powder form being from 30% to 75% by weight (based on total solids content of the polyol or polyols in the coating), preferably from 40% to 75% by weight (based on total solids content of the polyol or polyols in the coating), in particular from 50% to 60% by weight (based on total solids content of the polyol or polyols in the coating), it being an optional possibility to repeat steps a), b) and c) two or more times in alternation, preferably from 5 to 50 times, in particular from 20 to 40 times, wherein the polyol or polyols is/are xylitol, erythritol, mannitol, 1,1-GPM (1-O-$\alpha$-D-glucopyranosyl-D-mannitol), 1,6-GPS (6-O-$\alpha$-D-glucopyranosyl-D-sorbitol), 1,1-GPS (1-O-$\alpha$-D-glucopyranosyl-D-sorbitol), or mixtures thereof and wherein the polyol or polyols added in powder form used for dusting has/have a particle size distribution of 90% < 50 $\mu$m.

2. The process as claimed in claim 1, wherein the solids content of the coating medium is in the range from 30% to 90%, preferably from 50% to 70%.

3. The process as claimed in any one of claims 1 or 2, wherein the polyol present in dissolved form and/or as a suspension constituent and/or the polyol used for dusting is selected from the group consisting of disaccharide alcohols.

4. The process as claimed in any one of claims 1 to 3, wherein the polyol is isomalt, a 1,6-GPS-enriched mixture of 1,1-GPM and 1,6-GPS, a 1,1-GPM enriched mixture of 1,1-GPM and 1,6-GPS or a mixture of 1,1-GPM, 1,6-GPS and 1,1-GPS.

5. The process as claimed in any one of claims 1 to 4, wherein the temperature of the coating medium during application of the coating layer(s) is from 25°C to 90°C, preferably from 45°C to 55°C.

6. The process as claimed in any one of claims 1 to 5, wherein the temperature of the drying air in step c) is from 20°C to 80°C.

7. The process as claimed in any one of claims 1 to 6, wherein gum arabic, flavors, colors, active substances, intensive sweeteners, active pharmaceutical substances, nutraceuticals and/or tooth mineralizing substances are used in the coating.

8. The process as claimed in any one of claims 1 to 7, wherein after a first group of layers a second group of layers with a different composition is applied, such as a group of layers containing color, for example.

9. The process as claimed in claim 8, wherein the polyol of the second type of layer is isomaltulose, erythritol or xylitol.

10. The process according to any one of claims 1 to 9, wherein the powder and/or the coating medium contains a free flow agent, an anticaking compound, a flowability enhancer for the powder, in particular $SiO_2$ and/or a compound modifying the viscosity and/or surface tension of the coating medium.

11. A product obtainable in accordance with one or more of claims 1 to 10.

12. The product of claim 11, selected from the group consisting of confectioneries, nuts, hard and soft caramels, hard and soft snack articles, tablets, compacts and chewing gum candies.

13. The product of claim 12, comprising an animal feed, seed, pesticide-containing body, herbicide-containing body, catalyst, laundry detergent or the like.

14. The product according to any one of claims 11 to 13, comprising in its coating an anticaking compound, a flowability enhancer for the powder, in particular $SiO_2$ and/or a compound modifying the viscosity and/or surface tension of the coating medium.

**Patentansprüche**

1. Verfahren zur Herstellung von dragierten Produkten, umfassend einen Kern und eine nicht-hygroskopische, vorzugsweise zuckerfreie, Drageedecke, wobei die Drageedecke mindestens eine Drageeschicht, vorzugsweise zwei oder mehrere bis viele Drageeschichten umfasst, und wobei die Drageedecke **dadurch** auf den Kern aufgebracht wird, dass als Dragiermedium eine Lösung oder Suspension aus einem oder mehreren Polyolen hergestellt wird und dieses Dragiermedium in einem Verfahrensschritt a) zum Aufbringen einer Drageeschicht auf den Kern aufgebracht und anschließend in einem Verfahrensschritt b) mit einem oder mehreren pulverförmigen Polyolen abgestreut wird und anschließend in einem Verfahrensschritt c) bei 20°C - 80°C luftgetrocknet wird, wobei die Menge des oder der pulverförmigen Polyole 30 bis 75 Gew.-% (bezogen auf Gesamt-Trockensubstanz des Polyols oder der Polyole in der Decke), vorzugsweise 40 bis 75 Gew.-% (bezogen auf Gesamt-Trockensubstanz des Polyols oder der Polyole in der Decke), insbesondere 50 bis 60 Gew.-% (bezogen auf Gesamt-Trockensubstanz des Polyols oder der Polyole in der Decke) beträgt und wobei optional vorgesehen sein kann, die Schritte a), b) und c) alternierend zweimal oder mehrmals, vorzugsweise 5 bis 50 Mal, insbesondere 20 bis 40 Mal zu wiederholen, wobei es sich bei dem oder den Polyolen um Xylit, Erythrit, Mannit, 1,1-GPM (1-O-α-D-Glucopyranosyl-D-mannit), 1,6-GPS (6-O-α-D-Glucopyranosyl-D-sorbit), 1,1-GPS (1-O-α-D-Glucopyranosyl-D-sorbit) oder Gemischen davon handelt, und wobei das oder die zum Zwecke des Abstreuens hinzugefügten pulverförmigen Polyole eine Korngrößenverteilung von 90 % < 50 μm haben.

2. Verfahren nach Anspruch 1, wobei der Trockensubstanzgehalt des Dragiermediums im Bereich von 30 % bis 90 %, bevorzugt von 50 % bis 70 % liegt.

3. Verfahren nach einem der Ansprüche 1 oder 2, wobei das in gelöster Form und/oder als Suspensionsbestandteil vorliegende und/oder zum Abstreuen verwendete Polyol aus der Gruppe der Disaccharidalkohole ausgewählt wird.

4. Verfahren nach einem der Ansprüche 1 bis 3, wobei das Polyol Isomalt, ein 1,6-GPS-angereichertes Gemisch aus 1,1-GPM und 1,6-GPS, ein 1,1-GPM-angereichtertes Gemisch aus 1,1-GPM und 1,6-GPS oder ein Gemisch aus 1,1-GPM, 1,6-GPS und 1,1 GPS ist.

5. Verfahren nach einem der Ansprüche 1 bis 4, wobei die Temperatur des Dragiermediums beim Aufbringen der Drageeschicht(en) 25°C bis 90°C, vorzugsweise 45°C bis 55°C beträgt.

6. Verfahren nach einem der Ansprüche 1 bis 5, wobei die Temperatur der Trocknungsluft in Schritt c) bei 20°C bis 80°C liegt.

7. Verfahren nach einem der Ansprüche 1 bis 6, wobei Gummi arabicum, Aromen, Farbstoffe, Wirkstoffe, Intensivsüßstoffe, pharmazeutische Wirkstoffe, Nutrazeutika und/oder zahnmineralisierende Stoffe in der Decke verwendet werden.

8. Verfahren nach einem der Ansprüche 1 bis 7, wobei nach einer ersten Gruppe von Schichten eine zweite Gruppe von Schichten mit einer anderen Zusammensetzung aufgebracht wird, zum Beispiel eine Gruppe von Farbstoffhaltigen Schichten.

9. Verfahren nach Anspruch 8, wobei das Polyol der zweiten Schichtart Isomaltulose, Erythrit oder Xylit ist.

10. Verfahren nach einem der Ansprüche 1 bis 9, wobei das Pulver und/oder das Dragiermedium ein Rieselmittel, Antibackmittel, einen Fließverbesserer für das Pulver, insbesondere $SiO_2$ und/oder eine Verbindung enthält, die die Viskosität und/oder Oberflächenspannung des Dragiermediums ändert.

11. Produkt, das nach einem oder mehreren der Ansprüche 1 bis 10 erhalten werden kann.

12. Produkt nach Anspruch 11, wobei dieses aus der Gruppe der Süßwaren, Nüsse, Hart- und Weichkaramellen, harte und weiche Snackartikel, Tabletten, Komprimate, Kaugummidragee ausgewählt wird.

13. Produkt nach Anspruch 12, wobei dieses ein Tiernahrungsmittel, Saatgut, Pestizid-haltiger Körper, Herbizid-haltiger Körper, Katalysator, Waschmittel oder ähnliches ist.

14. Produkt nach einem der Ansprüche 11 bis 13, das in seiner Beschichtung ein Antibackmittel, einen Fließverbesserer für das Pulver, insbesondere $SiO_2$ und/oder eine Verbindung aufweist, die die Viskosität und/oder Oberflächenspannung des Dragiermediums ändert.

**Revendications**

1. Procédé de production de produits enrobés en turbine, comprenant un noyau et un enrobage non hygroscopique, de préférence un enrobage sans sucre, où l'enrobage comprend au moins une couche, de préférence deux ou plus jusqu'à un grand nombre de couches, et l'enrobage est appliqué au noyau en préparant en tant que milieu d'enrobage une solution ou suspension d'un ou plusieurs polyols et dans une étape opératoire a), en appliquant ce milieu d'enrobage au noyau dans le but d'appliquer une couche, puis dans une étape opératoire b), saupoudrant avec un ou plusieurs polyols sous forme de poudre, et ensuite, dans une étape opératoire c), effectuant le séchage à l'air à 20°C à 80°C, la quantité du polyol ou des polyols sous forme de poudre étant de 30 % à 75 % en poids (par rapport à la teneur en solides totale du polyol ou des polyols dans l'enrobage), de préférence de 40 % à 75 % en poids (par rapport à la teneur en solides totale du polyol ou des polyols dans l'enrobage), notamment de 50 % à 60 % en poids (par rapport à la teneur en solides totale du polyol ou des polyols dans l'enrobage), la possibilité étant donnée en option de répéter les étapes a), b) et c) deux fois ou plus en alternance, de préférence de 5 à 50 fois, notamment de 20 à 40 fois, dans lequel le polyol ou les polyols est/sont le xylitol, l'érythritol, le mannitol, 1,1-GPM (1-O-$\alpha$-D-glucopyranosyl-D-mannitol), 1,6-GPS (6-O-$\alpha$-D-glucopyranosyl-D-sorbitol), 1,1-GPS (1-O-$\alpha$-D-glucopyranosyl-D-sorbitol) ou des mélanges de ceux-ci, et dans lequel le polyol ou les polyols ajouté(s) sous forme de poudre utilisé(s) pour le saupoudrage a/ont une distribution de taille particulaire de 90 % < 50 $\mu$m.

2. Procédé selon la revendication 1, dans lequel la teneur en solides du milieu d'enrobage est dans la plage de 30 % à 90 %, de préférence de 50 % à 70 %.

3. Procédé selon l'une quelconque des revendications 1 ou 2, dans lequel le polyol présent sous forme dissoute et/ou en tant que constituant de suspension et/ou le polyol utilisé pour saupoudrer est sélectionné parmi le groupe constitué d'alcools de disaccharide.

4. Procédé selon l'une quelconque des revendications 1 à 3, dans lequel le polyol est l'isomalt, un mélange enrichi en 1,6-GPS de 1,1-GPM et de 1,6-GPS, un mélange enrichi en 1,1-GPM de 1,1-GPM et de 1,6-GPS ou un mélange de 1,1-GPM, 1,6-GPS et 1,1-GPS.

5. Procédé selon l'une quelconque des revendications 1 à 4, dans lequel la température du milieu d'enrobage au cours de l'application de la/des couche(s) d'enrobage est de 25°C à 90°C, de préférence de 45°C à 55°C.

6. Procédé selon l'une quelconque des revendications 1 à 5, dans lequel la température de l'air de séchage à l'étape c) est de 20°C à 80°C.

7. Procédé selon l'une quelconque des revendications 1 à 6, dans lequel la gomme arabique, des arômes, des colorants, des substances actives, des édulcorants intenses, des substances pharmaceutiques actives, des nutraceutiques et/ou des substances de minéralisation dentaire sont utilisés dans l'enrobage.

8. Procédé selon l'une quelconque des revendications 1 à 7, dans lequel après un premier groupe de couches, un second groupe de couches avec une composition différente est appliqué, tel qu'un groupe de couches contenant un colorant, par exemple.

9. Procédé selon la revendication 8, dans lequel le polyol du second type de couche est l'isomaltulose, l'érythritol ou le xylitol.

10. Procédé selon l'une quelconque des revendications 1 à 9, dans lequel la poudre et/ou le milieu d'enrobage contient un agent fluidisant, un composé antiagglomérant, un amplificateur de fluidité pour la poudre, notamment SiO$_2$ et/ou un composé modifiant la viscosité et/ou la tension superficielle du milieu d'enrobage.

11. Produit pouvant être obtenu selon l'une ou plusieurs des revendications 1 à 10.

12. Produit selon la revendication 11, sélectionné parmi le groupe constitué de sucreries, noix, caramels durs et mous, snacks durs et mous, comprimés, produits compacts et chewing-gums.

13. Produit selon la revendication 12, comprenant un aliment pour animaux, de semence, un corps contenant un pesticide, un corps contenant un herbicide, un catalyseur, un détergent pour lessive ou similaire.

14. Produit selon l'une quelconque des revendications 11 à 13, comprenant dans son enrobage un composé antiagglomérant, un amplificateur de fluidité pour la poudre, notamment SiO$_2$ et/ou un composé modifiant la viscosité et/ou la tension superficielle du milieu d'enrobage.

Figure /

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03000068 A
- EP 0625311 B1
- WO 0038532 A
- EP 0625578 B1
- DE 19532396 C2